# EUROPEAN PATENT SPECIFICATION

(11) **EP 3 885 125 B1**
(45) Date of publication and mention of the grant of the patent: **05.07.2023**
(21) Application number: 20174286.3
(22) Date of filing: 13.05.2020
(51) Int. Cl.: B32B 5/26, B32B 7/12, B32B 27/08, B32B 27/12, B32B 7/14, B32B 27/30, B32B 27/32, B32B 27/40, B32B 5/02, B32B 5/24, B32B 3/08, E04B 1/70

(54) **RAINPROOF CURTAIN WALL, FABRICATION METHOD AND APPLICATION THEREOF**
REGENDICHTE VORHANGWAND, HERSTELLUNGSVERFAHREN UND ANWENDUNG DAVON
MUR-RIDEAU ÉTANCHE À LA PLUIE, PROCÉDÉ DE FABRICATION ET APPLICATION ASSOCIÉS

(30) Priority: 25.03.2020 CN 202010218192
(43) Date of publication of application: 29.09.2021
(73) Proprietor: Suzhou Vantell Material Technology Co., Ltd., Suzhou, Jiangsu 215159 (CN)
(72) Inventor: ZHOU, Lei, Suzhou, Jiangsu 215159 (CN)
(74) Representative: Dr. Gassner & Partner mbB

(56) References cited:
- JP-A- 2002 172 739
- US-A1- 2019 249 419

## Description

### FIELD OF THE INVENTION

The invention relates to the field of waterproofness, moisture permeability, drainage and ventilation technologies of a building, and in particular to a rainproof curtain wall, a fabrication method and an application thereof.

### DESCRIPTION OF RELATED ART

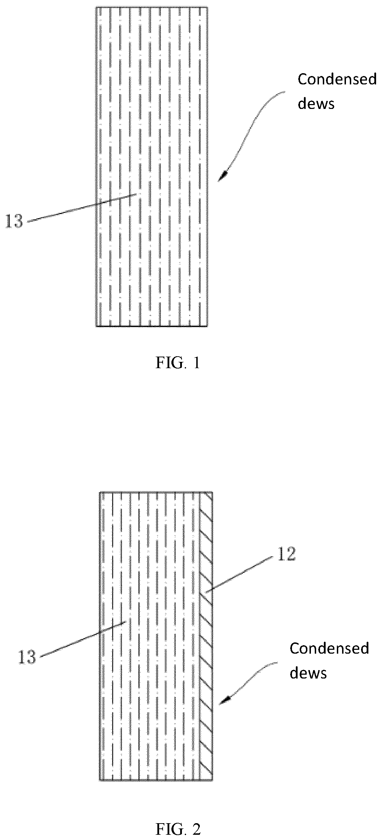

When there is a relatively large difference between the temperatures inside and outside a room, as shown in FIG. 1, large amount moisture or condensed dew will be formed on the outer surface of an assembled building, a square cabin, a wooden building or the like, which will negatively affect the service life of the buildings.

For the purpose of addressing the above issue, as shown in FIG. 2, a breathable pater (that is, a waterproof moisture-permeable house wrap) is usually attached onto the outer surface of a building in the prior art, so that the moisture or condensed dew is produced on the surface of the house wrap.

US 2019/249419 A discloses a draining construction wrap which includes a pliable moisture impermeable layer having interior and exterior surfaces. A drainage framework is configured to channel moisture across the exterior surface of the pliable moisture impermeable layer. The drainage framework includes a plurality of support struts. Each of the support struts includes a base strut portion coupled with the exterior surface, a strut support face, and a strut body extending from the base strut portion to the strut support face. A plurality of drain channels are between the support struts. The draining construction wrap includes an installation surface configured for coupling with an outer wall. The installation surface includes the strut support faces of the plurality of support struts. The strut bodies of the plurality of support struts brace the installation surface and the pliable moisture impermeable layer is recessed from the installation surface with a strut gap therebetween.

JP 2002-172739 A discloses a moisture permeable waterproof sheet which can be utilized for simply forming a wall structure, and can adjust humidity in an outer wall structure corresponding to the difference between indoor and outdoor humidities, in spite of a circumferential temperature change to prevent the generation of dew condensation in the outer wall structure.

However, the breathable paper does not have a water draining structure for guiding the flow of the moisture or condensed dew on the surface thereof. Due to the capillary action, the moisture or condensed dew cannot be removed from the surface of the breathable paper as soon as possible. Therefore, it is difficult to keep the surface of the breathable paper or the back surface of the outer wall dry, and a mould can be easily generated, shortening the service life of the buildings.

### BRIEF SUMMARY OF THE INVENTION

Regarding the deficiencies present in the prior art, an object of the present application is to provide a rainproof curtain wall having good drainage and ventilation performances, which requires low costs of materials, man power, and construction, and prolongs the service life of a building.

The object of the present application is achieved by the following technical solutions: A rainproof curtain wall comprising an inner lining layer (1), a plurality of resilient bumps (2) arrayed on a side of the inner lining layer (1), and a surface layer (3) provided on a side of the resilient bumps (2) departing from the inner lining layer (1),characterized in that, the first inner lining layer (1) comprises a first mesh layer, and the surface layer (3) comprises a second mesh layer (32).

In the above technical solution, the inner lining layer is fixed onto a heat insulation layer of a building, and the surface layer is fixed onto an outer wall hanging board of the building. Therefore, a drainage and ventilation space is formed by the rainproof curtain wall between the heat insulation layer and the outer wall hanging board, in which condensed dews can flow down to prevent moisture from being accumulated on the surface of the heat insulation layer and keep the outer surface of the heat insulation layer dry, serving the functions of drainage and ventilation. In addition, air can flow from bottom to top in the in the drainage and ventilation space to bring the moisture out of the drainage and ventilation space. The resilient bumps provide a gap between the heat insulation layer and the outer wall hanging board, serving as a rainscreen to further improve the effect of drainage and ventilation. As a result, the outer surface of the heat insulation layer and the inner surface of the outer wall hanging board can be kept dry, which avoids the generation of a mould, prolongs the service life of a building, ensures the heat insulation efficiency of the heat insulation layer, saves energy and reduces energy consumption. Meanwhile, providing the surface layer can support and position individual discrete resilient bumps, so as to provide a flat outer surface.

In a preferred embodiment, the inner lining layer may include a first mesh layer, a waterproof moisture-permeable layer or a first waterproof layer, and the surface layer may include a second waterproof layer and/or a second mesh layer.

In the above technical solution, the particular structures of the inner lining layer and the surface layer can be selected based on actual applications of the rainproof curtain wall, so as to meet different demands, providing a wide range of application.

In a preferred embodiment, the resilient bump may be made of ethylene-vinyl acetate (EVA), polypropylene (PP), polyethylene (PE), Polyurethane (PU), foamed EVA, foamed PP, foamed PE, or foamed PU, the first mesh layer may be made of EVA, PE, PVC, ECB, PU, TPE, or glass fibre, and the second waterproof layer may be made of EVA, PE, PVC, ECB, PU, TPE or fibre glass.

In the above technical solution, by being made of materials selected from EVA, PP, PE, PU, foamed EVA, foamed PP, foamed PE, or foamed PU, the resilient bumps can meet the requirements for supporting, reducing material cost and remaining resilient. It is to be noted that, any material that can meet the above requirements also in the scope of the present application. In addition, the materials that can meet the requirements for the inner lining layer and the surface layer are in the scope of the present application. Further, by using the resilient bumps made of the above materials, a non-compressible cavity structure is formed between the inner lining layer and the outer lining layer, so as to ensure good performances of drainage and ventilation and provide high supporting strength.

In a preferred embodiment, the resilient bump has a height of 1-20 mm.

In the above technical solution, each of the resilient bumps in an array is separately disposed on the inner lining layer, which requires a low cost. The amount of the resilient bumps per square meter and the height thereof can be adjusted according to the regions having different weathers to which the rainproof curtain wall is applied. Fixing the resilient bumps onto the inner lining layer and the surface layer by hot-melting connection provides a stable fixing at a low cost.

A second object of the present application is to provide a method for fabricating the above rainproof curtain wall.

The second object of the present application is achieved by the following technical solution:
a method for fabricating the rainproof curtain wall comprising adhesively fixing the resilient bumps with the inner lining layer and the surface layer via hot-melting connection.

The above technical solution can achieve a good fixing of the resilient bumps on the inner lining layer and the surface layer at a low production cost.

Also disclosed herein is a waterproof moisture-permeable roll material having a rainproof curtain wall.

The waterproof moisture-permeable roll material includes a rainproof curtain wall, which includes an inner lining layer and a surface layer, the inner lining layer including a waterproof moisture-permeable layer, the surface layer including a second waterproof layer, or the surface layer including a second waterproof layer and a second mesh layer.

The waterproof moisture-permeable roll material having a rainproof curtain wall can be applied to the outer surfaces of different buildings, for example, the outer surface of a heat insulation board of a high-rise building, the outer surface of an assembled building, or the outer surface of a wooden house, to form a waterproof and moisture-permeable rainproof curtain wall. For example, the moisture in a heat insulation board (that is, the heat insulation board of a building) is absorbed by the inner lining layer (that is, the waterproof moisture-permeable layer) and condensed to form dews in the inner lining layer. The condensed dews, by overcoming the capillary action, can flow downwards in the drainage and ventilation space, so as to prevent the moisture from being accumulated on the surface of the heat insulation layer and keep it dry, serving the functions of waterproofness, moisture permeability, drainage and ventilation.

A seventh object of the present application is to provide a building envelope having a rainproof curtain wall.

The seventh objection of the present application can be achieved by the following technical solution:
an envelope including a rainproof curtain wall, which includes an inner lining layer and a surface layer, wherein the inner lining layer is a first mesh layer and the surface layer is a second mesh layer.

In the above technical solution, the rainproof curtain wall can be directly installed on the breathable paper on the outer surface of a building, serving the functions of drainage, ventilation, and moisture permeability.

Also disclosed herein is a ventilation structure having a rainproof curtain wall.

The ventilation structure including a rainproof curtain wall which includes an inner lining layer and a surface layer, wherein the inner lining layer includes a first waterproof layer, the surface layer includes a second waterproof layer and a second mesh layer, one side of the second mesh layer is fixed with a resilient bump, and the other side of the second mesh layer is fixed with one side of the second waterproof layer.

The rainproof curtain wall can be used for the ventilation of a building. For example, it can form a ridge ventilation structure at the ventilation port of the roof ridge of a building, so as to achieve the ventilation and air circulation in a triangle region of the roof.

A ninth object of the present application is to provide a building envelope having a rainproof curtain wall.

The ninth objection of the present application can be achieved by the following technical solution:
a building envelope including a rainproof curtain wall which includes an inner lining layer and a surface layer, wherein the inner lining layer includes a first mesh layer and the surface layer includes a second mesh layer.

In the above technical solution, the rainproof curtain wall can be used in a wall body, a roof or a floor as a cushion layer in place of a wooden stud. It has flexibility facilitating transportation and installation, and excellent drainage and ventilation performances.

In summary, the present application has the following benefit technical effects:
1. by fixing an inner lining layer onto the heat insulation layer of a building and fixing a surface layer onto the outer wall hanging board of the building, a drainage and ventilation space can be formed by the rainproof curtain wall between the heat insulation layer and the outer wall hanging board, so that condensed dews can flow downwards in the drainage and ventilation space, so as to prevent the moisture from being accumulated on the surface of the heat insulation layer and keep it dry, serving the functions of drainage and ventilation. Meanwhile, air flows from bottom to top in the drainage and ventilation space, bringing the moisture out of the drainage and ventilation space. Providing the resilient bumps ensures a gap formed between the heat insulation layer and the outer wall hanging board, which can serve as a rainscreen to improve the effect of drainage and ventilation. Therefore, the outer surface of the heat insulation and the inner surface of the outer wall hanging board can be kept dry, so as to avoid the generation of a mould, prolong the service life of the building, ensure the heat insulation efficiency of the heat insulation layer, save energy and reduce energy consumption. In addition, providing a surface layer enables supporting and positioning individual discrete resilient bumps and providing a flat outer surface;
2. the surface layer can be provided as a sing-layer structure or a double-layer structure, so as to perform a dry or wet plastering operation based on actual needs, facilitating construction;
3. the resilient bumps are adhesively fixed with the inner lining layer and the surface layer by hot-melting connection. In particular, a first way of fabrication includes: the first unwinding machine supplies the inner lining layer; the second unwinding machine supplies the surface layer; the feeder supplies a resilient bump; a feeding chute provided on the feeding belt receives the resilient bumps cut by the guided cutting mechanism, and delivers them to the first heating mechanism, where the resilient bumps are hot melted at one end and delivered to the first bonding mechanism; the inner lining layer is delivered to the first bonding mechanism and combined with the resilient bumps there; the surface layer is delivered to the second bonding mechanism, in which a heat conductive roller is provided for heating the other end of the resilient bumps, so that the inner lining layer and the resilient bumps provided by previous work stations are adhere to the surface layer via the second bonding mechanism to provide a rainproof curtain wall; and then the rainproof curtain wall is delivered to the winding mechanism via the storage mechanism which can temporally store part of the rainproof curtain wall for achieving a continuous operation of the production line. A second way of fabrication includes: the dripping device drips a feed liquid onto the inner lining layer, which is then cooled down to form a resilient bump adhesively fixed on the inner lining layer; the resilient bump is heated by the hot melting roller to become sticky, so as to be fixed onto the surface layer, finishing the fabrication of the final rainproof curtain wall. In a third way of fabrication, when the inner lining layer is the first mesh layer and the surface layer is a second mesh layer, the inner lining layer and the surface layer are fed to the hot compression roller, and the resilient bumps fall onto the hot compression roller, where the hot compression roller heats the two ends of the resilient bumps and fixing the resilient bumps between the inner lining layer and the surface layer by pressing, finishing the rainproof curtain wall. When the inner lining layer is a waterproof moisture-permeable layer and the surface layer is a second mesh layer, the surface layer is fed to the hot compression roller, and the resilient bumps fall onto the hot compression roller, where the hot compression roller heats one end of the resilient bumps and fixes the resilient bumps onto the surface layer by pressing. Then, the surface layer fixed with the resilient bumps are fed to the compression roller. During the feeding, the other ends of the resilient bumps are heated by the heating tube, so that the other ends of the resilient bumps become sticky and fixed onto the inner lining layer fed to the compression roller under the compression of the compression roller when the surface layer is fed to the compression roller, finishing the rainproof curtain wall. In this way, the rainproof curtain wall can be fabricated at a low cost by a simple process. The three ways of fabrication can be used for fabricating the rainproof curtain wall of the present application at a low cost, in which the second and third ways of production are simpler;
4. the rainproof curtain wall of the present application can be used as a waterproof moisture-permeable roll material, which can form a waterproof and moisture-permeable rainproof curtain wall structure and be applied onto the outer surface of a building, serving the function of waterproofness, moisture permeability, drainage, and ventilation. It can be also directly applied to a building envelope, for example, the outer surface of a breathable paper of a building, so as to form a rainproof curtain wall, serving the functions of drainage, ventilation and moisture permeability. Further, it can be directly applied to a ventilation structure, for example, a ventilation port of a roof, so as to form a ridge ventilation structure, achieving the ventilation and air circulation in a triangle region formed by the roof of a building. Further, it can be directly applied to a building envelope, for example, on a wall body, a roof, or a floor as a cushion layer in place of a wooden stud. In this case, due to its flexibility, facilitates transportation and installation is facilitated, and a flexible supporting structure is formed, providing the effect of drainage and ventilation.

### BRIEF DESCRIPTION OF DRAWINGS

FIG. 1 is the schematic diagram showing the situation in which moisture and condensed dews are formed on the outer surface of a building in the prior art;
FIG. 2 is the schematic diagram showing the situation in which moisture and condensed dews are formed on the surface of a house wrap after adding the house wrap in the prior art;
FIG. 3 is the schematic structural view of Embodiment 1 of the present application;
FIG. 4 is the schematic perspective view of Embodiment 1 of the present application;
FIG. 5 is the schematic structural view of Embodiment 2 of the present application;
FIG. 6 is the schematic perspective view of Embodiment 2 of the present application;
FIG. 7 is the schematic structural view of Embodiment 3 of the present application;
FIG. 8 is the schematic perspective view of Embodiment 3 of the present application;
FIG. 9 is the schematic structural view of Embodiment 4 of the present application;
FIG. 10 is the schematic perspective view of Embodiment 4 of the present application;
FIG. 11 is the schematic perspective view of Embodiment 5 of the present application;
FIG. 12 is the top view of FIG. 11;
FIG. 13 is the schematic explored view of Embodiment 6 of the present application;
FIG. 14 is the schematic perspective view of FIG. 13;
FIG. 15 is the production line of Embodiment 13;
FIG. 16 is the schematic structural view of the feeding belt and guided cutting mechanism of Embodiment 9;
FIG. 17 is the production line of Embodiment 10;
FIG. 18 is the production line of Embodiment 11; and
FIG. 19 is the production line of Embodiment 12.

Reference signs: 1. inner lining layer; 2. resilient bump; 3. surface layer; 31. second waterproof layer; 32. second mesh layer; 4. first unwinding machine; 5. second unwinding machine; 6. feeder; 61. feeding bin; 62. feeding belt; 621. feeding chute; 63. guided cutting mechanism; 631. frame; 632. first guiding tube; 633. manipulator; 634. second guiding tube; 635. cutting knife; 64. vacuum pump; 7. first bonding mechanism; 8. second bonding mechanism; 9. heating mechanism; 10. storage mechanism; 101. cloth storage rack; 102. cloth storage wheel; 11. winding mechanism; 111. winding rack; 112. roll-over frame; 113. roll-over motor; 114. winding motor; 115. winding wheel; 116. clamping cylinder; 117. clamping wheel; 12. breathable paper; 13.wall body; 14. self-adhesive tape; 15. first unwinding mechanism; 16. placing table; 17. dripping device; 18. second unwinding mechanism; 19. hot melting roller; 20. hot bonding roller; 21. winding mechanism; 22. first material rack; 23. second material rack; 24. feeding device; 25. hot compression roller; 26. heating tube; 27. compression roller.

### DETAILED DESCRIPTION

The present application will be further described below in detail in connection with drawings.

### Embodiment 1

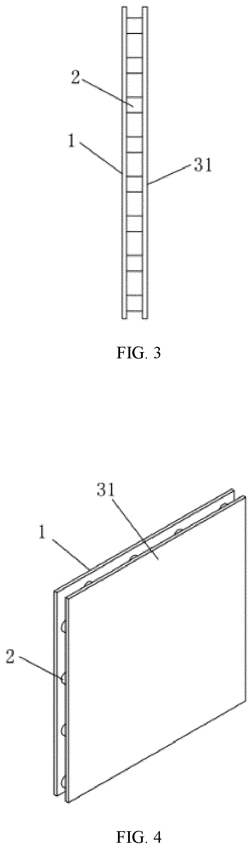

As shown in FIG. 3 and FIG.4, a rainproof curtain wall comprises an inner lining layer 1, a plurality of resilient bumps 2 arrayed on one side of the inner lining layer 1, and a surface layer 3 provided on the side of individual resilient bumps 2 departing from the inner lining layer 1. Each of the inner lining layer 1, the resilient bump 2, and the surface layer 3 can be made of plastic. A gap is provided between two adjacent resilient bumps 2, individual resilient bumps 2 in the same row or in the same column are equally distanced, and the resilient bumps 2 in two adjacent rows or columns are misaligned with each other. In particular, the inner lining layer 1 is a waterproof moisture-permeable layer made of EVA, PE, PVC, ECB, PU, PP, or TPE; and the surface layer 3 is a second waterproof layer 31 made of EVA, PE, PVC, ECB, PU, TPE or glass fibre. In one embodiment, the second waterproof layer 31 is made of a non-woven fabric. In other embodiments, it can be made of one or more selected from the group consisting of a plastic film, a plastic woven cloth or a glass fibre cloth. The resilient bump 2 can be made of EVA, PP, PE, PU, foamed EVA, foamed PP, foamed PE, or foamed PU. It has a height of 1-20 mm. Each of the resilient bumps 2 in an array is separately disposed on the inner lining layer 1, and thus requires a low cost. In addition, the number of the resilient bumps 2 per square meter and the height thereof can be selected based on the regions having different weathers to which the rainproof curtain wall is applied. In one embodiment, the resilient bump 2 can be of a cylindrical structure, having a diameter of 4-20 mm and a Shore Hardness of 30-70.

This embodiment can be applied to a waterproof moisture-permeable roll material. By fixing a waterproof moisture-permeable layer onto the outer surface of a building via a binder or a nail, a waterproof and moisture-permeable rainproof curtain wall structure (that is, a rainscreen) can be formed, which has the functions of waterproofness, moisture permeability, drainage, and ventilation, and facilitates a dry operation and construction.

### Embodiment 2

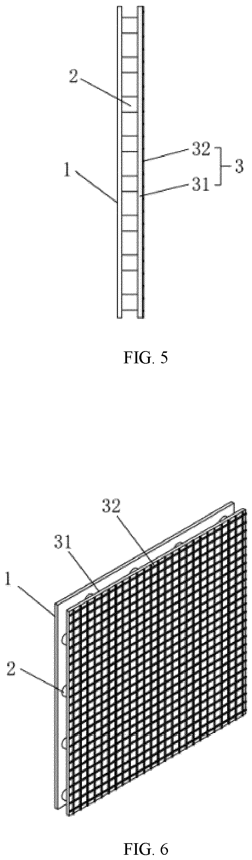

Referring to FIG. 5 and FIG.6, Embodiment 2 differs from Embodiment 1 in that, the surface layer 3 includes a second waterproof layer 31 and second mesh layer 32. In this embodiment, the second waterproof layer 31 can be a non-woven cloth, the second mesh layer 32 can be a glass fibre mesh cloth, and the second waterproof layer 31 and the second mesh layer 32 can be adhesively fixed with each other.

This embodiment can be applied to a waterproof moisture-permeable roll material. By fixing a waterproof moisture-permeable layer onto the outer surface of a building via a binder or a nail, a waterproof, moisture-permeable, and rainproof curtain wall structure can be formed, which has the functions of waterproofness, moisture permeability, drainage, and ventilation. Providing the second mesh layer 32 facilitates a wet plastering operation and construction.

### Embodiment 3

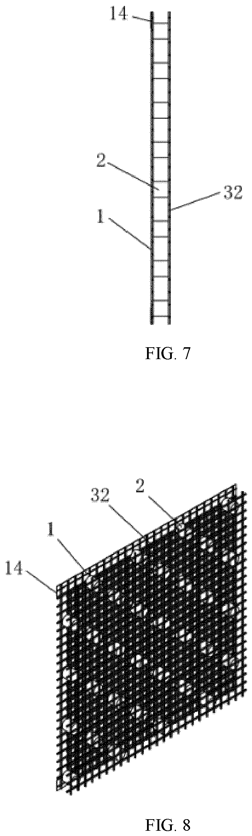

Referring to FIG.7 and FIG.8, this embodiment differs from Embodiment 1 in that, the inner lining layer 1 is a first mesh layer, which can be made of EVA, PE, PVC, ECB, PU, TPE, or glass fibre. In this embodiment, the first mesh layer is a glass fibre mesh cloth. The surface layer 3 is a second mesh layer, which is a glass fibre mesh cloth. Both of the first mesh layer and the second mesh layer 32 are a glass fibre mesh cloth, which will not interference the flowing of moisture or condensed dews, ensuring a good dehumidification.

This embodiment can be applied to a building envelope, for example, the outer surface of a breathable paper provided on the outer surface of a building. By adhesively fixing the first mesh layer onto the outer surface of a breathable paper 12, a rainproof curtain wall can be formed, serving the functions of drainage, ventilation, and moisture permeability and facilitating a dry operation and construction. In this embodiment, a self-adhesive tape 14 is provided on the side of the first mesh layer facing the breathable paper 12.

### Embodiment 4

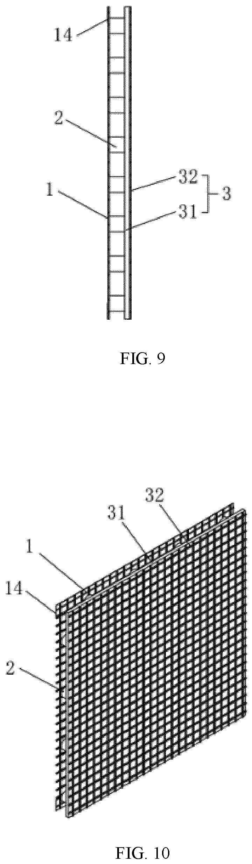

Referring to FIG.9 and FIG. 10, this embodiment differs from Embodiment 3 in that, the surface layer 3 includes a second waterproof layer 31 and a second mesh layer 32. In one embodiment, the second waterproof layer 31 is a non-woven cloth, the second mesh layer 32 is a glass fibre mesh cloth, and the second waterproof layer 31 and the second mesh layer 32 are adhesively fixed.

This embodiment can be applied to a building envelope, for example, the outer surface of a breathable paper provided on the outer surface of a building. By adhesively fixing the first mesh layer onto the outer surface of a breathable paper 12, a rainproof curtain wall can be formed, serving the functions of drainage, ventilation, and moisture permeability. Providing the second mesh layer 32 facilitates a wet operation and construction.

### Embodiment 5

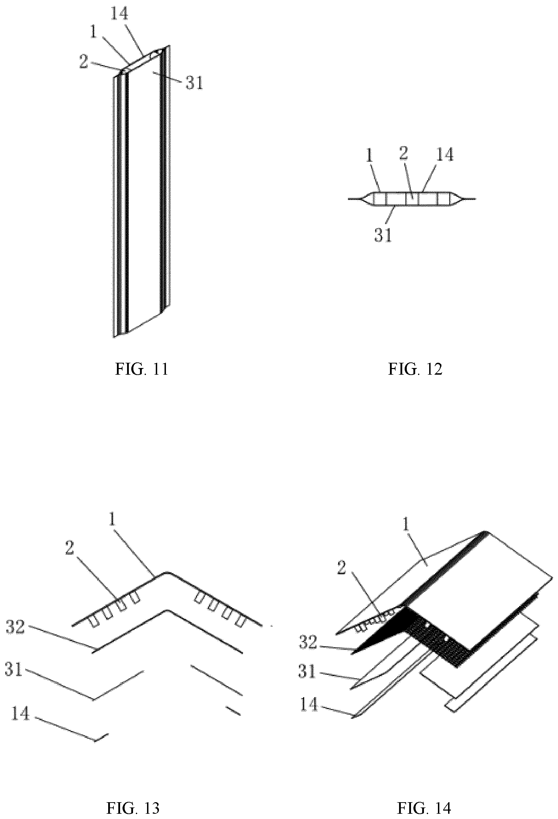

Referring to FIG. 11 and FIG.12, this embodiment differs from Embodiment 3 in that, the inner lining layer 1 is a first waterproof layer, which can be made of EVA, PE, PVC, ECB, PU, TPE, or glass fibre. In one embodiment, the first waterproof layer is a non-woven cloth. In other embodiments, the first waterproof layer can be one or more selected from the group consisting of a plastic film, a plastic woven cloth, or a glass fibre cloth. The surface layer 3 is a second waterproof layer 31, which can be a non-woven cloth.

This embodiment can be applied to a building envelope, for example, the outer surface of a breathable paper provided on the outer surface of a building. By adhesively fixing the first waterproof layer onto the outer surface of a breathable paper 12, a rainproof curtain wall can be formed, serving the functions of waterproofness, drainage, ventilation, and moisture permeability. In this embodiment, the rainproof curtain wall is made into a long strip shape, and a plurality of rainproof curtain walls are adhesively fixed onto the outer surface of the breathable paper 12 transversely at an interval. Adopting a long strip shape can save materials, reduce the production cost, and facilitate mounting a flitch plate on the outer surface of the second waterproof layer 31 or the like.

### Embodiment 6

Referring to FIG.13 and FIG. 14, this embodiment differs from Embodiment 1 in that, the inner lining layer 1 is a first waterproof layer, which can be made of EVA, PE, PVC, ECB, PU, TPE or glass fibre. In this embodiment, the first waterproof layer is made of TPE. The surface layer 3 includes a second waterproof layer 31 and a second mesh layer 32. In this embodiment, the second waterproof layer 31 is a non-woven cloth, and the second mesh layer 32 is a glass fibre mesh cloth. One side of the second mesh layer 32 is fixed with the resilient bump 2, and the other side of the second mesh layer 32 is fixed with one side of the second waterproof layer 31.

This embodiment can be applied to a ventilation structure, for example, the roof of a building. For example, an air outlet is provided at the ridge of the roof top, and a first air inlet and a second air inlet are respectively provided in the eaves on both sides of the roof. Rainproof curtain walls are respectively provided outside the air outlet, the first air inlet, and the second air inlet, and the other side of the second waterproof layer 31 is adhesively fixed outside the air outlet, the first air inlet and the second air inlet, so as to form a ridge ventilation structure, which can achieve the ventilation in the triangle area of the roof to ensure a good air circulation. In this embodiment, the other side of the second waterproof layer 31 is provided with a self-adhesive tape 14.

### Embodiment 7

Referring to FIG.7 and FIG.8, this embodiment differs from Embodiment 1 in that, the inner lining layer 1 is a first mesh layer, which can be made of EVA, PE, PVC, ECB, PU, TPE or glass fibre. In this embodiment, the first mesh layer is a glass fibre mesh cloth, and the surface layer 3 is a second mesh layer 32, which is a glass fibre mesh cloth.

This embodiment can be applied to a building envelope, for example, at least one of a wall body 13, a roof or a floor of a building. Both of the wall body 13 and the roof include an inner panel and an outer panel. A rainproof curtain wall is provided between the inner panel and the outer panel, and/or two adjacent floors of a plurality of floors. The first mesh layer and the second mesh layer 32 are respectively adhesively fixed between corresponding inner panel and outer panel or two adjacent floors of a plurality of floors to form a flexible supporting structure, which can be used as a cushion layer in place of a wood stud. Since it is flexible, it is easy to transport and install, and at the same time has the functions of drainage and ventilation. In this embodiment, the side of the first mesh layer departing from the resilient bumps 2 is provided with a self-adhesive tape 14. Alternatively, the side of the second mesh layer 32 departing from the resilient bumps 2 can be provided with a self-adhesive layer 14 for a convenient installation.

### Embodiment 8

The present application further discloses a method for fabricating a rainproof curtain wall. Referring to FIGS. 1-7, the resilient bump 2 is adhesively fixed with the inner lining layer 1 and the surface layer 3 by hot-melting connection. In particular, the resilient bumps 2 are disposed on the inner lining layer 1 in an amount of 50-2000 per square meter. The particular number of the resilient bumps 2 can be determined according to the performance requirements for the curtain wall.

### Detection:

The products obtained in Embodiments 1-7 have good structural strength, and comply with anti-fire and flame retardant requirements in a building standard. In addition, these products perform well in a waterproof test, showing good ventilation and waterproof performances as required by a waterproof product.

### Embodiment 9

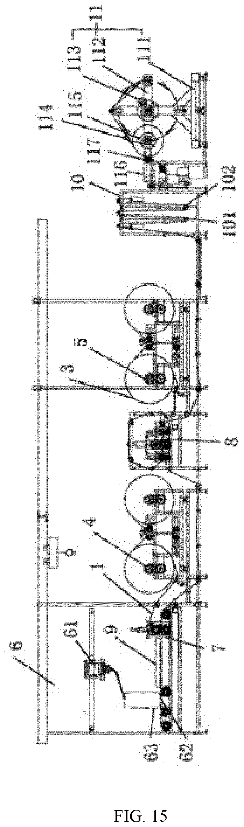

Referring to FIG. 15, a production line for carrying out the method of Embodiment 8 includes a first unwinding machine 4 for providing the inner lining layer 1, a second unwinding machine 5 for providing the surface layer 3, and a feeder 6 for providing the resilient bumps 2. The moving direction of the rainproof curtain wall is shown in the figure.

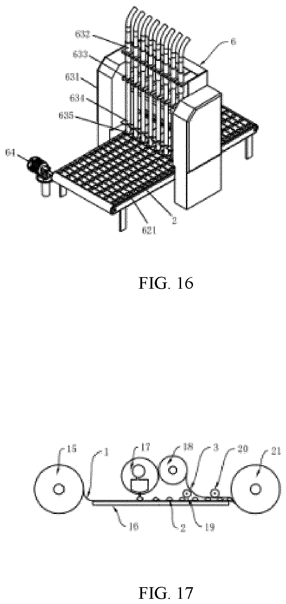

Referring to FIG. 16, the feeder 6 includes a feeding bin 61 for storing a stock column, a guided cutting mechanism 63 provided under the feeding bin 61 for clamping the stock column to move and cutting the stock column into the resilient bumps 2, and a feeding belt 62 disposed under the guided cutting mechanism 63. In particular, a plurality of stock columns are placed side by side in the feeding bin 61. The guided cutting mechanism 63 includes a frame 631, on which a first guiding tube 632, a manipulator 633 for clamping the stock column to move along a vertical direction, a second guiding tube 634, and a cutting knife 635 are sequentially mounded from top to bottom. A driving motor (not shown) is provided in the frame 631 for controlling the manipulator 633 and the cutting knife 635. The first guiding tube 632 and the second guiding tube 635 are provided along the longitudinal direction of the frame 631. The number of each of the first guiding tube 632, the second guiding tube 634, the manipulator 633 and the cutting knife 635 is corresponding to that of the stock columns. The first guiding tube 632, the second guiding tube 634, the manipulator 633 and the cutting knife 635 are disposed side by side along the transverse direction of the frame 631. The stock columns fed from the feeding bin 61 is sequentially passed through the first guiding tube 632 and the second guiding tube 634 to be above the feeding belt 62. A plurality of feeding chutes 621 for the stock columns to fall in are provided on the feeding belt 62. After the stock column is completely inserted into the feed chute 621 under the guiding of the manipulator 633, the cutting knife 635 is controlled by the drive motor to cut the stock column into segments, which fall into the feeding chutes and become the resilient bumps 2, finishing the cutting of the resilient bumps 2. A vacuum roller (not shown) is provided under the feeding belt 62, which is connected with one or more vacuum pumps 64 (one being shown in the FIG. 16). A vacuum can be formed by the vacuum pump 64 so as to achieve stable falling of the resilient bumps 2.

Referring FIG.15, the feeding belt 62 is provided with a heating mechanism 9 and a first bonding mechanism 7 at the end along the drive direction thereof. It further includes a second bonding mechanism 8 at a subsequent work station following the first bonding mechanism 7, and a storage mechanism 10 and a winding mechanism 11 at a subsequent work station following the second bonding mechanism 8. The material from a first unwinding machine 4 is fed to the first bonding mechanism 7, and the material from the second unwinding machine 5 is fed to the second bonding mechanism 8. The feeding belt 62 carrying the resilient bumps 2 are driven to pass the heating mechanism 9 so that the upper ends of the resilient bumps 2 are hot molten by the heating mechanism 9. In one embodiment, the heating mechanism 9 can be a radiation heating mechanism. In another embodiment, the first unwinding machine 4 can be a double-station unwinding machine, so that the initial end of one roll of material can be adhere to the tail end of another roll of material that is going to be used up, achieving a continuous operation. The inner lining layer 1 provided by the first unwinding machine 4 enters the first bonding mechanism 7, with the surface being bonded with the hot-molten ends of the resilient bumps 2 by pressing, finishing a single-face processing. Then, the surface layer 3 is driven to the second bonding mechanism 8, where a heat conductive roller is provided for hot melting the surface of the resilient bumps 2 without damaging the surface layer 3. The surface layer 3 is provided by the second unwinding machine 5. In one embodiment, the unwinding machine 5 has a single-station unwinding structure.

Then, a semi-finished product, that is, a rainproof curtain wall, is driven to the storage mechanism 10. The storage mechanism 10 includes a cloth storage rack 101 provided with a cloth storage wheel 102, via which the rainproof curtain wall is wound onto the cloth storage rack 101. In one embodiment, two cloth storage wheels 102 are sliding connected with a vertical bar of the cloth storage rack 101, so as to tension the rainproof curtain wall. When the winding mechanism 11 is paused and individual mechanisms at previous stations continue to operate, part of the rainproof curtain wall can be stored by the storage mechanism 10 as a temporary storage. The winding mechanism 11 includes a winding rack 111 provided with a roll-over frame 112 and a roll-over motor 113 for driving the roll-over frame 112 to turn round. The roll-over frame 112 is provided with a winding wheel 115 and a winding motor 114 for driving the winding wheel 115 to turn round. In one embodiment, the winding motor 114 drives the winding wheel 115 to perform winding under a constant tension. The roll-over frame 112 is further provided with a clamping cylinder 116, and a clamping wheel 117 is provided on a piston rod of the clamping cylinder 116, by which the winding wheel 115 compacts the rainproof curtain wall 117 so as to wind the same. When the winding operation of a winding wheel 115 is completed, the roll-over motor 113 starts to work by cutting off the rainproof curtain wall at a given length, and another winding wheel 115 starts to perform winding, so as to realize a continuous operation. In one embodiment, the cutting off can be performed manually or by using an automatic cutting knife.

### Embodiment 10

Referring to FIG. 17, a production line for performing the production method of Embodiment 8 sequentially includes a first unwinding mechanism 15 for unwinding the first inner lining layer 1, a placing table 16 for placing the inner lining layer 1, a dripping device 17 for providing the resilient bumps 2, a second unwinding mechanism 18 for unwinding the surface layer 3, a hot-melting roller 19, a hot bonding roller 20 and a winding mechanism 21 for winding the curtain wall thereon. In particular, the first unwinding mechanism 15 includes a first roller for winding the inner lining layer 1 and a first motor for driving the first roller to rotate. The inner layer 1 wound on the first roller is unwound from the first roller under the driving of the first motor. The second unwinding mechanism 18 includes a second roller for winding the surface layer 3 and a second motor for driving the second roller. The surface layer 3 wound on the second roller are unwound from the second roller under the driving of the second motor. The winding mechanism 21 includes a third roller for winding the rainproof curtain wall and a third motor for driving the third roller. The third motor drives the third roller to rotate, so that the rainproof curtain wall is wound on the third roller, achieving the winding of the rainproof curtain wall. The dripping device 17 includes a storage box for storing a feed liquid. In one embodiment, the feed liquid is the material of the resilient bumps 2 in a liquid form, which can be cooled down to form the resilient bumps 2. An extruding mechanism is provided on the storage box for extruding the feed liquid out of the storage box. A discharge tube is provided at the bottom of the storage box perpendicular to the horizontal face of the placing table 16. A control valve is provided on the on the discharge tube for controlling the dripping amount of the liquid as needed, which, for example, can be determined by the height of the resilient bumps as needed.

The first unwinding mechanism 15 and the second unwinding mechanism 21 are respectively positioned at the two ends of the placing table 16, the dripping device 17, the second unwinding mechanism 18, the hot-melting roller 19, and the hot bonding roller 20 are positioned above the placing table 16, and the hot-melting roller 19 and the hot bonding roller 20 are positioned between the second unwinding mechanism 18 and the winding mechanism 21. The inner layer 1 is delivered onto the placing table 16 via the first unwinding mechanism 15. When the inner lining layer 1 is moved toward the winding mechanism 21, the dripping device 17 drips the feed liquid onto the inner lining layer 1, which is cooled down to form the resilient bumps 2 adhesively fixed on the surface layer of the inner lining layer 1. The hot-melting roller 19 contacts the side of the resilient bumps 2 departing from the inner lining layer 1 and hot melts this side of the resilient bumps2, and the hot bonding roller 20 fixes the surface layer 3 delivered by the second unwinding mechanism 18 onto the molten side of the resilient bumps 2, so as to form a rainproof curtain wall, which is then wound on the winding mechanism 21, finishing the fabrication of the rainproof curtain wall.

### Embodiment 11

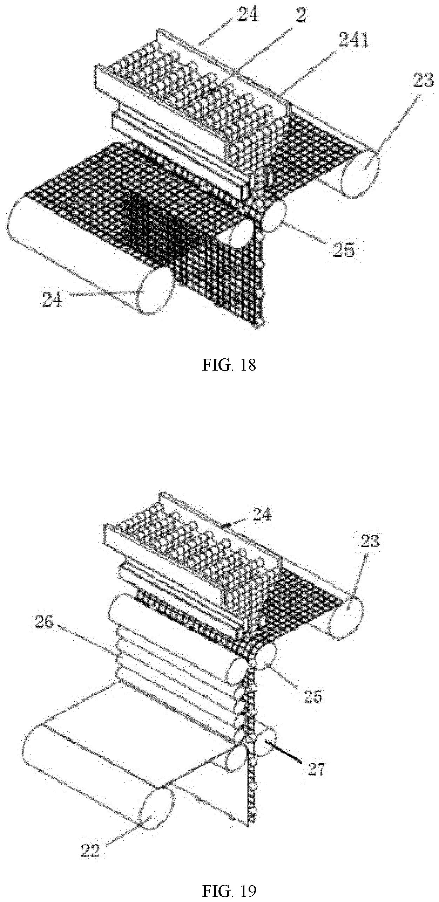

Referring to FIG. 18, a production line for carrying out the method of Embodiment 8 is provided, including a first material rack 22 for providing the inner lining layer 1, a second material rack 23 for providing the surface layer 3, and a feeder 24 for providing the resilient bump 2, in which the feeder 24 is located between the first material rack 22 and the second material rack 23. In one embodiment, the feeder 24 includes a feeding bin 241 and a hot compression roller 25 provided at a discharge port of the feeding bin 241. The materials from the first material rack 22 and the second material rack 23 are fed to the hot compression roller 25. In one particular embodiment, when the inner lining layer is a first mesh layer and the surface layer is a second mesh layer 32 (that is, the rainproof curtain walls in Embodiment 3 and Embodiment 7), the inner lining layer 1 provided by the first material rack 22 and the surface layer 3 provided by the second material rack 23 are fed to the hot compression roller 25, and the resilient bumps 2 provided by the feeding bin 241 fall into the hot compression roller 25, where the hot compression roller 25 heats the two ends of the resilient bumps 2 and fixes the resilient bumps 2 between the inner lining layer 1 and the surface layer 3 by pressing, finishing the fabrication of the rainproof curtain wall. In this embodiment, the first material rack 22, the second material rack 23 and the hot compression roller 25 are arranged side by side along the horizontal direction, and the feeding bin 241 is disposed right over the hot compression roller 25.

### Embodiment 12

Referring to FIG. 19, a production line for carrying out the method of Embodiment 8 is provided. This embodiment differs from Embodiment 11 in that, the feeder 24 includes a feeding bin 241, a hot compression roller 25 provided at the discharge port of the feeding bin 241, and a compression roller 27 provided under the hot compression roller 25, with a heating tube 26 being provided between the hot compression roller 25 and the compression roller 27. The material from the first material rack 22 is fed to the compression roller 27, and the material from the second material rack 23 is sequentially fed to the hot compression roller 25 and the compression roller 27. Based on actual needs, when the first lining layer 1 is a waterproof moisture-permeable layer and the surface layer is a second mesh layer 23, the surface layer 3 provided by the second material rack 23 is fed to the hot compression roller 25, and the resilient bump 2 provided by the feeding bin 231 falls onto the hot compression roller 25, so that the hot compression roller 25 heats one end of the resilient bump 2 and fixes it onto the surface layer 3 by pressing. Meanwhile, the surface layer fixed with the resilient bump 2 is fed to compression roller 27, during which the other end of the resilient bumps 2 are heated by the heating tube 26, so that the other ends of the resilient bumps 2 become sticky and fixed onto the inner lining layer 1 fed to the compression roller 27 under the compression of the compression roller 27 when surface layer 3 is fed to the compression roller 27, finishing the fabrication of the rainproof curtain wall. In this embodiment, the second material rack 23 and the hot compression roller 25 are disposed side by side along the horizontal direction, the feeding bin 241 is disposed right over the hot compression roller 25, the compression roller 27 is disposed right under the hot compression roller 25, and the first material rack 22 and the compression roller 27 are disposed side by side along the horizontal direction.

The embodiments provided above are some of the preferred embodiments of the present application, not intended to limit the scope of the present application thereto. Therefore, equivalent changes made to the structure, shape, and principle of the present application should fall within the scope of the present application.

## Claims

1. A rainproof curtain wall comprising an inner lining layer (1), a plurality of resilient bumps (2) arrayed on a side of the inner lining layer (1), and a surface layer (3) provided on a side of the resilient bumps (2) departing from the inner lining layer (1), **characterized in that**, the first inner lining layer (1) comprises a first mesh layer, and the surface layer (3) comprises a second mesh layer (32).

2. The rainproof curtain wall of claim 1, **characterized in that**, the material of the resilient bumps (2) is selected from the group consisting of EVA, PP, PE, PU, foamed EVA, foamed PP, foamed PE, or foamed PU, the material of the first mesh layer is selected from the group consisting of EVA, PE, PVC, ECB, PU, TPE, or glass fibre, and the second mesh layer (32) is selected from the group consisting of EVA, PE, PVC, ECB, PU, TPE or fibre glass.

3. The rainproof curtain wall of claim 2, **characterized in that**, the resilient bumps (32) have a height of 1-20 mm.

4. A method for fabricating the rainproof curtain wall of anyone of claims 1-3, **characterized in that**, the resilient bumps (2) are adhesively fixed with the inner lining layer (1) and the surface layer (3) by hot-melting connection.

5. An envelope, **characterized in** comprising the rainproof curtain wall of claim 1

## Patentansprüche

1. Regendichte Vorhangwand, umfassend eine Innenverkleidungsschicht (1), eine Vielzahl elastischer Noppen (2), die auf einer Seite der Innenverkleidungsschicht (1) angeordnet sind, und eine Oberflächenschicht (3), die auf einer Seite der elastischen Noppen (2) vorgesehen ist, die von der Innenverkleidungsschicht (1) ausgeht, **dadurch gekennzeichnet, dass** die erste Innenverkleidungsschicht (1) eine erste Gewebeschicht umfasst und die Oberflächenschicht (3) eine zweite Gewebeschicht (32) umfasst.

2. Regendichte Vorhangwand nach Anspruch 1, **dadurch gekennzeichnet, dass** das Material der elastischen Noppen (2) aus der Gruppe, bestehend aus EVA, PP, PE, PU, geschäumtem EVA, geschäumtem PP, geschäumtem PE oder geschäumtem PU, ausgewählt ist, dass das Material der ersten Gewebeschicht aus der Gruppe bestehend aus EVA, PE, PVC, ECB, PU, TPE oder Glasfaser ausgewählt ist, und dass die zweite Gewebeschicht (32) aus der Gruppe, bestehend aus EVA, PE, PVC, ECB, PU, TPE oder Glasfaser, ausgewählt ist.

3. Regendichte Vorhangwand nach Anspruch 2, **dadurch gekennzeichnet, dass** die elastischen Noppen (32) eine Höhe von 1-20 mm haben.

4. Verfahren zur Herstellung der regendichten Vorhangwand nach einem der Ansprüche 1 bis 3, **dadurch gekennzeichnet, dass** die elastischen Noppen (2) mit der Innenverkleidungsschicht (1) und der Oberflächenschicht (3) durch eine Heißschmelzverbindung verklebt werden.

5. Umhüllung, **dadurch gekennzeichnet, dass** sie die regendichte Vorhangwand nach Anspruch 1 umfasst.

## Revendications

1. Mur-rideau étanche à la pluie comprenant une couche de revêtement intérieur (1), une pluralité de bosses élastiques (2) disposées sur un côté de la couche de revêtement intérieur (1), et une couche superficielle (3) prévue sur un côté des bosses élastiques (2) partant de la couche de revêtement intérieur (1), **caractérisé en ce que** la première couche de revêtement intérieur (1) comprend une première couche treillis et la couche superficielle (3) comprend une seconde couche treillis (32).

2. Mur-rideau étanche à la pluie selon la revendication 1, **caractérisé en ce que** le matériau des bosses élastiques (2) est sélectionné dans le groupe constitué de EVA, PP, PE, PU, EVA expansé, PP expansé, PE expansé ou PU expansé, le matériau de la première couche treillis est sélectionné dans le groupe constitué de EVA, PE, PVC, ECB, PU, TPE ou fibre de verre, et la seconde couche treillis (32) est sélectionnée dans le groupe constitué de EVA, PE, PVC, ECB, PU, TPE ou fibre de verre.

3. Mur-rideau étanche à la pluie selon la revendication 2, **caractérisé en ce que** les bosses élastiques (32) sont d'une hauteur comprise entre 1 et 20 mm.

4. Procédé de fabrication du mur-rideau étanche à la pluie selon l'une des revendications 1 à 3, **caractérisé en ce que** les bosses élastiques (2) sont fixées de manière adhésive à la couche de revêtement intérieur (1) et à la couche superficielle (3) par liaison thermofusible.

5. Enveloppe, **caractérisée en ce qu'**elle comprend le mur-rideau étanche à la pluie selon la revendication 1.
